# EUROPÄISCHE PATENTSCHRIFT

(11) **EP 3 408 661 B1**
(45) Veröffentlichungstag und Bekanntmachung des Hinweises auf die Patenterteilung: **18.05.2022**
(21) Anmeldenummer: 17703043.4
(22) Anmeldetag: 20.01.2017
(51) Int. Cl.: G01N 27/622

(54) **VERFAHREN ZUR HERSTELLUNG EINER IONENTRANSPORTRÖHRE**
METHOD FOR THE FABRICATION OF AN ION TRANSPORT TUBE
PROCÉDÉ DE FABRICATION D'UN TUBE DE TRANSPORT D'ION

(30) Priorität: 29.01.2016 DE 102016101598
(43) Veröffentlichungstag der Anmeldung: 05.12.2018
(73) Patentinhaber: Gottfried Wilhelm Leibniz Universität Hannover, 30167 Hannover (DE)
(72) Erfinder: ZIMMERMANN, Stefan, 30938 Burgwedel (DE); AHRENS, André, 30167 Hannover (DE)
(74) Vertreter: Gramm, Lins & Partner Patent- und Rechtsanwälte PartGmbB
(86) Internationale Anmeldenummer: PCT/EP2017/051217
(87) Internationale Veröffentlichungsnummer: WO 2017/129491

(56) Entgegenhaltungen:
- GB-A- 2 451 239
- US-A1- 2003 034 740
- US-B1- 6 943 347
- US-B1- 7 155 812
- Ken A Peterson ET AL: "SANDIA REPORT Macro-Meso-Microsystems Integration in LTCC: LDRD Report", , 1. März 2007 (2007-03-01), Seiten 1-90, XP055360028, Gefunden im Internet: URL:http://prod.sandia.gov/techlib/access- control.cgi/2007/071871.pdf [gefunden am 2017-03-29]

## Beschreibung

Die Erfindung betrifft ein Verfahren zur Herstellung einer lonentransportröhre, die zum Transport von Ionen durch eine als innerer Hohlraum der lonentransportröhre ausgebildete lonentransportkammer mittels eines elektrischen Felds geeignet ist, das durch Anlegen elektrischer Potentiale an Elektroden der lonentransportröhre erzeugbar ist.

Eine solche lonentransportröhre, die auch als Driftröhre bezeichnet wird, wird z.B. bei Gasanalyse-Einrichtungen eingesetzt, insbesondere bei einem lonenmobilitätsspektrometer. Ein lonenmobilitätsspektrometer (IMS) dient der Analyse von Stoffgemischen. Die meist in der gasförmigen Phase vorliegenden Gemische werden hierbei über ihre lonenmobilität getrennt, welche maßgeblich vom Kollisionsquerschnitt und der Masse des Stoffes abhängig ist. Dabei können Stoffkonzentrationen im Bereich weniger ppb (parts per billion) bis ppt (parts per trillion) innerhalb einer Sekunde detektiert werden. Auf Grund dieser analytischen Fähigkeiten und des geringen instrumentellen Aufwandes werden IMS heute in einer Vielzahl von Anwendungsbereichen, wie der Detektion chemischer Kampf- und Sprengstoffe, der Lebensmittelindustrie zur Qualitätssicherung, der Sicherheitstechnik zur Messung toxischer Verbindungen und Drogen sowie der Medizintechnik u.a. zur Atemgasanalyse und schnellen Identifikation von Bakterien eingesetzt.

Eine mögliche Methode, die Trennung der Stoffe nach ihrer lonenmobilität vorzunehmen, ist die Messung der Flugzeit verschiedener lonenspezies bei Atmosphärendruck. Bewegen sich Ionenpakete in einem elektrischen Feld entlang einer definierten Strecke, so kann die dafür benötigte Zeit als Maß für die lonenmobilität herangezogen werden. Der grundlegende Aufbau eines solchen Driftröhren-Ionenmobilitätsspektrometers besteht i.d.R. aus einem lonisationsbereich, einem Driftbereich und einem Detektor. Eine Beschreibung findet sich in der WO 2015/091146 A1.

Um eine hohe analytische Performance zu erreichen, wird ein Driftbereich mit einem möglichst homogenen elektrischen Feld benötigt. Dies wird meist über die Anordnung von ringförmigen Elektroden, welche mittels Spannungsteilern auf definierte Potentiale gelegt werden, realisiert. Eine besondere Herausforderung ist hierbei der Aufbau möglichst kostengünstiger und auch baukleiner Driftröhren.

Vorschläge für die Herstellung von lonentransportröhren gehen z.B. aus der DE 41 30 810 C1 oder der DE 103 47 656 B4 hervor. Weitere Vorschläge für die Herstellung von lonentransportröhren sind bekannt aus der US 7,155,812 B1 und der Veröffentlichung Ken A. Peterson et al.: "SANDIA REPORT Macro-Meso-Microsystems Integration in LTCC: LDRD Report".

Der Erfindung liegt die Aufgabe zugrunde, ein Herstellungsverfahren für eine lonentransportröhre, die kostengünstig und in möglichst baukleiner Ausführung herzustellen ist, anzugeben.

Diese Aufgabe wird gemäß Anspruch 1 gelöst durch ein Verfahren zur Herstellung einer lonentransportröhre, die zum Transport von Ionen durch eine als innerer Hohlraum der lonentransportröhre ausgebildete lonentransportkammer mittels eines elektrischen Felds geeignet ist, das durch Anlegen elektrischer Potentiale an Elektroden der lonentransportröhre erzeugbar ist, mit den Herstellungsschritten:
a) Bereitstellen eines vollen Materialblocks, bei dem eine Vielzahl von elektrisch leitenden Elektrodenschichten überlappend entlang einer Längsachse des Materialblocks hintereinander und im Wesentlichen parallel zueinander angeordnet ist, wobei jeweils benachbarte Elektrodenschichten voneinander beabstandet sind und im hierdurch gebildeten Zwischenraum zwischen benachbarten Elektrodenschichten jeweils wenigstens eine Schicht aus Isolationsmaterial vorhanden ist, durch die die benachbarten Elektrodenschichten miteinander verklebt und gegeneinander elektrisch isoliert sind,
b) Erzeugen eines Hohlraums in dem Materialblock, um die lonentransportkammer zu bilden.

Auf diese Weise kann eine lonentransportröhre auf einfache und kostengünstige Weise hergestellt werden. Der Materialblock, der bereits einen Schichtaufbau aus Elektrodenschichten und Schichten aus Isolationsmaterial aufweist und somit ein Verbundwerkstoff ist, kann in einem separaten Arbeitsgang hergestellt werden. Auf diese Weise ist die Bereitstellung einer lonentransportröhre mit dem erfindungsgemäßen Verfahren auch arbeitsteilig möglich, indem in einem Arbeitsgang der Materialblock hergestellt wird und in einem anderen, zeitlich und/oder räumlich getrennten Arbeitsvorgang aus dem Materialblock eine lonentransportröhre mit bestimmten, spezifizierten geometrischen Eigenschaften hergestellt wird. Die Erfindung erlaubt daher insbesondere auch die kundenspezifische Herstellung von lonentransportröhren auf besonders einfache und kostengünstige Weise.

Die Nutzung des vorgefertigten Materialblocks hat den weiteren Vorteil, dass die lonentransportröhre und damit eine mit der lonentransportröhre ausgerüstete Gasanalyse-Einrichtung besonders günstig in miniaturisierter Form bereitgestellt werden kann. Auf diese Weise lassen sich Gasanalyse-Einrichtungen für neue Anwendungen einsetzen, insbesondere lassen sich verschiedene, neue Bereiche in Alltagsanwendungen mit der Erfindung erschließen.

Eine besondere Schwierigkeit bei der Bereitstellung von lonentransportröhren, insbesondere für hoch sensible lonenmobilitätsspektrometer, besteht zudem darin, die lonentransportröhren möglichst verunreinigungsfrei herzustellen und verunreinigungsfrei für die spätere Anwendung bereitzustellen. Auch in dieser Hinsicht bietet die vorliegende Erfindung besondere Vorteile, da sie für den Einsatz inerter und damit für die Gasanalyse neutraler Materialien besonders geeignet ist. Dies wird z.B. dadurch unterstützt, dass die benachbarten Schichten mit dem dazwischenliegenden Isolationsmaterial miteinander verklebt sind, wobei sie insbesondere druckdicht miteinander verklebt sein können, so dass keine gesonderten Dichtungen erforderlich sind. Solche gesonderten Dichtungen, z.B. in Form von O-Ringen, stellen zusätzliche Störquellen im Betrieb eines hochsensiblen lonenmobilitätsspektrometers dar. Die benachbarten Elektrodenschichten können insbesondere direkt mit dem Isolationsmaterial miteinander verklebt sein, so dass auch kein zusätzliches Material, wie ein weiteres Isolationsmaterial, zwischen den Elektrodenschichten vorhanden sein muss.

Ein weiterer Vorteil der Erfindung besteht darin, dass auch bei kleinem Bauraum eine hohe Zahl an Elektroden, d.h. an Elektrodenschichten, realisiert werden kann. Dies hat wiederum den Vorteil, dass ein besonders homogenes elektrisches Feld erzeugt werden kann, was ebenfalls förderlich für hochsensible Gasanalyse-Anwendungen ist.

Ein weiterer Vorteil der Erfindung besteht darin, dass durch Verwendung des vorgefertigten Materialblocks, wie erläutert, eine lonentransportröhre mit einer darin ausgebildeten lonentransportkammer bereitgestellt werden kann, die bei möglichst homogenem elektrischen Feld gasdicht und während der gesamten Fertigung und ihres späteren Betriebs formstabil ist und die zudem einfach und kostengünstig herzustellen ist. Zudem ist eine solche lonentransportröhre sowie deren innerer Hohlraum mechanisch mit gewöhnlichen Werkzeugen zu bearbeiten und auf einfache Weise miniaturisierbar herzustellen.

Für die Erzeugung des Hohlraums in dem Materialblock kommen diverse Fertigungsverfahren in Frage, sowohl einzeln als auch in Kombination miteinander, wie z.B. Zerspanung, Laserbearbeitung, Ätzen.

Gemäß einer vorteilhaften Weiterbildung der Erfindung ist vorgesehen, dass der Hohlraum in dem Materialblock erzeugt wird, indem ein Zerspanungswerkzeug von einer Stirnseite des Materialblocks derart in den Materialblock eingeführt wird, dass mit vordringendem Zerspanungswerkzeug
a) abwechselnd eine Schicht aus Isolationsmaterial und eine Elektrodenschicht oder
b) abwechselnd eine Schicht aus Isolationsmaterial und eine Elektrodenschicht zusammen mit in der Elektrodenschicht eingelagertem Isolationsmaterial oder
c) nur Isolationsmaterial
zerspant wird. Das Zerspanungswerkzeug kann ein übliches Zerspanungswerkzeug sein, z.B. ein Bohrwerkzeug, ein Fräswerkzeug oder ein Schleifwerkzeug. Es können auch verschiedene Zerspanwerkzeuge eingesetzt werden, z.B. indem zunächst mit einem Bohrwerkzeug vorgebohrt wird und die Oberfläche der Bohrung anschließend mit einem Schleifwerkzeug geglättet wird. Aufgrund des als Materialblock verwendeten Verbundwerkstoffs ist wie erwähnt eine einfache mechanische Bearbeitung möglich. Ein weiterer Vorteil des Verbundwerkstoffs besteht in der hohen mechanischen Stabilität und der einfachen mechanischen Verarbeitung bei der Herstellung eines Hohlraums im Vergleich zum Aufbau aus einzelnen Segmenten. Weiterhin unterliegt ein Verbundwerkstoff keinerlei Formänderung und ist zu jedem Zeitpunkt mechanisch mit üblichen Werkzeugen bearbeitbar. Zusätzlich können weitere Komponenten eines IMS, z.B. lonenquelle und Detektor, mit konventionellen mechanischen Verbindungsmethoden am Verbundwerkstoff befestigt werden, beispielsweise durch das Einschneiden von Gewinden in den Verbundwerkstoff und die anschließende gasdichte Verschraubung mit entsprechenden Dichtungen (Flächendichtung oder O-Ring). Alternativ oder in Kombination damit kann auch eine Verklebung der lonentransportröhre mit den weiteren Komponenten erfolgen.

Gemäß einer vorteilhaften Weiterbildung der Erfindung erstreckt sich der Hohlraum im Wesentlichen in Richtung der Längsachse des Materialblocks, z.B. parallel zur Längsachse oder genau entlang der Längsachse. In einer vorteilhaften Weiterbildung erstreckt sich die größte Dimension des Hohlraums im Wesentlichen in Richtung und/oder parallel zur Längsachse des Materialblocks. Die Elektrodenschichten können insbesondere im Wesentlichen senkrecht zur Längsachse des Materialblocks angeordnet sein.

Gemäß einer vorteilhaften Weiterbildung der Erfindung ist vorgesehen, dass das Isolationsmaterial in Feststoffform, in pastöser Form oder in flüssiger Form, z.B. durch Verspachteln, Spritzen, Spritzgießen und/oder Pressen, in die Zwischenräume zwischen den Elektrodenschichten gebracht und damit verklebt wird. Auf diese Weise kann Isolationsmaterial in der jeweils geeignetsten Form auf einfache Weise zwischen den Elektrodenschichten angeordnet werden. Da das Isolationsmaterial in der Regel mit vergleichsweise dünner Schichtdicke zwischen den Elektrodenschichten angeordnet wird, kann es, wenn es in Feststoffform bereitgestellt wird, z.B. als dünne Folie oder Platte bereitgestellt werden. Das Isolationsmaterial in Feststoffform kann auch in Form eines Pulvers, Granulats oder sonstigen Halbzeuges vorliegen.

Gemäß einer vorteilhaften Weiterbildung der Erfindung ist vorgesehen, dass der Materialblock hergestellt wird, indem abwechselnd Elektrodenschichten und Isolationsmaterial-Schichten in zueinander im Wesentlichen paralleler Anordnung gestapelt werden und das Isolationsmaterial dann zur Herstellung der Verklebung aktiviert wird und danach aushärtet oder ohne Aktivierung aushärtet. Diese Vorgehensweise eignet sich insbesondere für Isolationsmaterial in Feststoffform oder in pastöser Form. Wird das Isolationsmaterial in Feststoffform eingesetzt, können abwechselnd Elektrodenschichten und Isolationsmaterial-Schichten ohne zusätzliche Komponenten aufeinander gestapelt werden. Wird Isolationsmaterial in pastöser Form genutzt, ist es vorteilhaft, zwischen den Elektrodenschichten jeweils Abstandshalter anzuordnen, um eine gleichmäßige Bildung von Isolationsmaterial-Schichten im späteren ausgehärteten Zustand sicherzustellen. Es ist natürlich auch möglich, solche Abstandshalter einzusetzen, wenn Isolationsmaterial in Feststoffform genutzt wird, was insbesondere vorteilhaft ist, wenn das Isolationsmaterial in Form eines Pulvers, Granulats oder sonstigen losen Halbzeuges vorliegt.

Das Aktivieren des Isolationsmaterials zur Herstellung der Verklebung kann z.B. eine Erwärmung (thermische Aktivierung), eine Bestrahlung z.B. mit Licht und/oder sonstigen elektromagnetischen Wellen und/oder eine chemische Aktivierung sein. Eine thermische Aktivierung kann z.B. durch Strahlungsheizung, Ofenheizung, integrierte Widerstandsheizung und/oder induktive Erwärmung erfolgen. Auf diese Weise kann ein Isolationsmaterial in Feststoffform zum Schmelzen gebracht werden und kann dann mit den Elektrodenschichten verpresst werden, so dass sich nach Aushärten des Isolationsmaterials die gewünschte Verklebung bildet. Die Erwärmung kann je nach verwendetem Isolationsmaterial z.B. auf eine Temperatur im Bereich von 200 °C bis 600 °C erfolgen. Generell ist es vorteilhaft, den Block aus Elektrodenschichten und Isolationsmaterial-Schichten vor, bei und/oder nach der Aktivierung mit einer Presskraft zu beaufschlagen, um auf diese Weise die Elektrodenschichten jeweils mit den Isolationsmaterial-Schichten sicher zu verbinden.

Sofern hierbei Abstandshalter eingesetzt werden, gilt Folgendes.

Generell ist jedes Material als Abstandshalter geeignet, welches im Bereich des aktivierten Zustands des Isolationsmaterials formstabil bleibt. Somit sind bei thermischen Verfahren die Abstandshalter im Bereich des Schmelzpunktes des Isolationsmaterials formstabil, bei chemischen Verfahren werden die Abstandshalter nicht durch Härter oder Ähnliches angegriffen. Es sind jedoch zwei Arten von geeigneten Materialien für Abstandshalter zu unterscheiden. Abstandshalter aus Materialien, welche die elektrischen Eigenschaften des Verbundwerkstoffs negativ beeinflussen, müssen nach der Herstellung entfernt werden. Abstandshalter aus anderen Materialien können im Verbundwerkstoff verbleiben. Eine Fertigung des Verbundwerkstoffs ohne Abstandshalter ist möglich, wenn die Schichtdicken während der Fertigung messtechnisch überwacht werden oder die Metalllagen an festen Positionen fixiert werden (durch Halterungen, Roboterassistenz).

Gemäß einer vorteilhaften Weiterbildung der Erfindung ist vorgesehen, dass der Materialblock hergestellt wird, indem die Elektrodenschichten in zueinander im Wesentlichen paralleler Anordnung mit dem für die zu erzeugende lonentransportröhre erforderlichen Abstand voneinander bereitgestellt werden, wobei sich die Elektrodenschichten zumindest in den Bereichen, in denen die lonentransportkammer erzeugt werden soll, nicht berühren, und dann die so bereitgestellte Elektrodenschichtenanordnung mit dem Isolationsmaterial umgossen wird, so dass zwischen benachbarten Elektrodenschichten gebildete Zwischenräume mit dem Isolationsmaterial ausgefüllt werden. Die Vorgehensweise eignet sich insbesondere, wenn ein durch die Aktivierung verflüssigtes oder ohnehin flüssiges Isolationsmaterial verwendet wird, das danach aushärtet. Sofern ein zunächst festes Isolationsmaterial z.B. in Pulver-Form oder Granulat-Form verwendet wird, kann das Umgießen der Elektrodenschichtanordnung mit dem Isolationsmaterial noch in festem Aggregatzustand des Isolationsmaterials erfolgen, d.h. vor Verflüssigung, oder wenn das Isolationsmaterial bereits verflüssigt ist. Einfacher ist letztendlich die Vorgehensweise, wenn das Isolationsmaterial bereits verflüssigt ist oder ohnehin flüssig ist. Das Umgießen der Elektrodenschichtanordnung mit dem Isolationsmaterial kann z.B. durch Eintauchen der vorbereiteten Elektrodenschichtenanordnungen in ein Gefäß mit verflüssigtem oder ohnehin flüssigem Isolationsmaterial erfolgen (Tauchverfahren).

Hierzu wird die bereitgestellte Elektrodenschichtenanordnung wahlweise in eine Halterung gesetzt, wie exemplarisch in den Figuren 4 und 5 gezeigt, welche die Schichtdicken des Isolationsmaterials vorgibt, oder die Metalllagen der Elektrodenschichten werden aus einem Vollmaterial durch Schlitzen gefertigt, siehe Figur 6, und nach der Herstellung des Verbundwerkstoffs vereinzelt. Die Zwischenräume der Metalllagen werden sodann mit Isolationsmaterial gefüllt, indem die Metalllagen in diesen, wie in Figur 7 dargestellt, eingetaucht werden. Hierbei ist es unerheblich, ob eine fließende Eigenschaft des Isolationsmaterials durch Schmelzen, Lösen oder feinkörniges Pulver oder Granulat oder Dispersionen aus diesen mit einer Flüssigkeit, wie bspw. Wasser, erzeugt wird, welches in einem zweiten Schritt verschmolzen wird. Die Zwischenräume können durch einmaliges Tauchen und Verbleiben der Metalllagen im Tauchbad oder durch wiederholtes Eintauchen zum Aufbringen mehrerer Schichten gefüllt werden.

Invers zum Tauchen können die einzelnen, fixierten Metalllagen alternativ mit dem Isolationsmaterial übergossen werden, um die Zwischenräume zu füllen. Auch bekannte Verfahren, wie Verspachteln, Spritzen, Spritzgießen und Pressintern, sind anwendbar, um die Zwischenräume mit Isolationsmaterial zu füllen.

Neben diesen thermischen Verfahren sind zur Herstellung des Verbundwerkstoffs auch chemische Verfahren anwendbar, bei denen das Isolationsmaterial seine abschließenden Materialparameter durch Reaktionen mit anderen Stoffen erhält, wie es z.B. bei Kunstharzen mit Härtern üblich ist. Die grundlegenden Festigungsverfahren entsprechen denen der thermischen Verfahren. Hierbei ist für mögliche Abstandshalter eine Formstabilität gegenüber den eingesetzten Stoffen gefordert. Gemäß einer vorteilhaften Weiterbildung der Erfindung ist vorgesehen, dass die einige oder alle Elektrodenschichten vor dem Verkleben mit dem Isolationsmaterial mit Aussparungen strukturiert werden, insbesondere Aussparungen im Bereich der zu bildenden lonentransportkammer. Eine solche Vorstrukturierung hat den Vorteil, dass der Materialverbrauch für die Elektrodenschichten reduziert werden kann. Ganz wesentlich ist auch, dass der Aufwand für die nachträgliche mechanische Bearbeitung zur Herstellung des Hohlraums, d.h. der zu bildenden lonentransportkammer, reduziert werden kann. So können die einzelnen Elektrodenschichten bereits mit einer jeweiligen Aussparung strukturiert sein, die dem Innendurchmesser oder sonstigem Innenquerschnitt der zu bildenden lonentransportkammer entspricht. Die Aussparung kann auch etwas untermaßig im Vergleich zu den Abmessungen der zu bildenden lonentransportkammer ausgebildet sein, was es ermöglicht, dass bei der Herstellung des Hohlraums noch etwas Material von den Elektrodenschichten abgetragen werden muss, jedoch mit verringertem Aufwand, weil im Wesentlichen nur Isolationsmaterial entfernt werden muss. Es ist auch möglich, die Aussparung übermaßig zu machen, d.h. mit einem größeren Durchmesser oder sonstigem größeren Querschnitt als die zu bildende lonentransportkammer. Dann kann bei der Herstellung des Hohlraums für die zu bildende lonentransportkammer nur Isolationsmaterial entfernt werden, so dass die lonentransportkammer komplett von dem Isolationsmaterial umschlossen ist, das auch im Bereich der Elektrodenschichten diese noch zumindest mit geringer Materialstärke abdeckt. Dies ermöglicht es beispielsweise, auch Materialien für die Elektrodenschichten zu verwenden, die an sich nicht die optimalen inerten Eigenschaften für eine hoch sensible Gasanalyse haben, was aber durch die Überdeckung mit dem Isolationsmaterial kompensiert werden kann.

Die Elektrodenschichten können auch mit anderen Aussparungen strukturiert sein, z.B. Aussparungen für eine Befestigung der lonentransportröhre, z.B. zum Anschrauben der lonentransportröhre an Komponenten einer Gasanalyse-Einrichtung. Alternativ oder zusätzlich können die Elektrodenschichten auch eine oder mehrere Aussparungen aufweisen, die lediglich zum Ausfüllen mit dem Isolationsmaterial vorgesehen sind. Solche Aussparungen können beispielsweise als Aussparungen mit kreisrundem Querschnitt, in Form von Langlöchern, z.B. in gebogener Form, oder mit sonstigen Außenkonturen ausgebildet sein. Bei der Herstellung der lonentransportröhre werden diese Aussparungen dann mit dem Isolationsmaterial gefüllt, wodurch die einzelnen Lagen des zwischen Elektrodenschichten sich anordnenden Isolationsmaterials zusätzlich miteinander verbunden werden. Dies wirkt sich zusätzlich positiv auf die Stabilität des entstehenden Materialblocks sowie der letztendlich entstehenden lonentransportröhre aus. In dem Materialblock- bzw. der lonentransportröhre sind dann in Längsrichtung verlaufende, sich durch eine Vielzahl von Elektrodenschichten oder sämtliche Elektrodenschichten erstreckende Kammern vorhanden, die mit dem Isolationsmaterial ausgefüllt sind.

Gemäß einer vorteilhaften Weiterbildung der Erfindung ist vorgesehen, dass aus dem Materialblock durch Vereinzeln in einer oder mehrerer im Wesentlichen parallel zur Längsachse des Materialblocks verlaufenden Trennebenen mehrere lonentransportröhren hergestellt werden. Auf diese Weise ist eine besonders wirtschaftliche Fertigung von lonentransportröhren in hoher Stückzahl möglich (Nutzen-Fertigung). Durch die Festlegung der Trennebenen im Materialblock können im Prinzip lonentransportröhren in beliebigen Querschnittsabmessungen aus dem Materialblock vereinzelt werden. Hinsichtlich der Länge der lonentransportröhre ist die größtmögliche Länge durch die Längserstreckung des Materialblocks gegeben, wobei durch Kürzen oder Zerschneiden eines bereits vereinzelten Teils des Materialblocks auch eine kürzere Länge der lonentransportröhre realisiert werden kann.

Mit dem beschriebenen Materialblock können außer der erläuterten lonentransportröhre auch weitere funktionelle Komponenten einer Gasanalyse-Einrichtung, insbesondere eines lonenmobilitätsspektrometers, die ein homogenes elektrisches Feld benötigen, hergestellt werden, z.B. Gitter für ein lonentor und eine Apertur können als eigene Schicht in dem Materialblock vorgesehen werden, ohne dass dieser seine zuvor erläuterten vorteilhaften Eigenschaften verliert. Auf diese Weise ist die Fertigung eines Verbundwerkstoffs möglich, der eine Vielzahl der konstruktiven Herausforderungen eines lonenmobilitätsspektrometers löst und zusätzlich die besonders einfache Fertigung kostengünstiger und baukleiner Driftröhren mit homogenem Driftfeld ermöglicht.

Das erfindungsgemäße Verfahren erlaubt die Herstellung einer lonentransportröhre, aufweisend eine Vielzahl von entlang einer Längsachse der lonentransportröhre hintereinander angeordneten, im Wesentlichen parallel zueinander angeordneten die Elektroden der lonentransportröhre bildenden Elektrodenschichten, die durch jeweilige Schichten von Isolationsmaterial, das zwischen benachbarten Elektrodenschichten angeordnet ist, gegeneinander elektrisch isoliert und durch das Isolationsmaterial miteinander druckdicht verklebt sind, wobei die lonentransportröhre eine sich entlang der Längsachse erstreckende, als innerer Hohlraum der lonentransportröhre ausgebildete lonentransportkammer aufweist und an der Außenseite der lonentransportröhre elektrische Kontaktstellen angeordnet sind, über die jede Elektrode der lonentransportröhre an der Außenseite der lonentransportröhre elektrisch kontaktierbar ist. Mit einer solchen lonentransportröhre können ebenfalls die zuvor erläuterten Vorteile realisiert werden. Insbesondere kann eine solche lonentransportröhre einfach und kostengünstig auch bei sehr kleinen Abmessungen (Miniaturisierung) bereitgestellt werden.

Hierbei können benachbarte Elektrodenschichten direkt über das Isolationsmaterial miteinander verbunden sein. Dementsprechend ist es nicht erforderlich, dass zwischen den benachbarten Elektrodenschichten weitere Komponenten, z.B. zur Isolation, vorhanden sind. So kann im zwischen benachbarten Elektrodenschichten gebildeten Zwischenraum nur das Isolationsmaterial vorhanden sein, das zugleich zur Verklebung benachbarter Elektrodenschichten dient.

Gemäß einer vorteilhaften Weiterbildung der Erfindung weist die lonentransportröhre an ihrer Außenseite eine eckige Querschnittskontur, z.B. eine rechteckige oder quadratische Querschnittskontur, und/oder eine runde Querschnittskontur auf. Auch andere eckige Querschnittskonturen sind vorteilhaft möglich z.B. 5-eckig, 6-eckig, 7-eckig oder 8-eckig. Eine solche Ausgestaltung der lonentransportröhre hat den Vorteil, dass diese einfach zu handhaben ist und insbesondere einfach auf einer ebenen Unterlage, z.B. einer elektrischen Leiterplatte, befestigt und elektrisch kontaktiert werden kann. In einer weiteren vorteilhaften Ausführungsform weist die lonentransportröhre an ihrer Außenseite eine runde Querschnittskontur auf. Eine z.B. kreisrunde Querschnittskontur hat verarbeitungstechnische Vorteile wie die einfache Herstellung von Außen- und Innenkontur mittels Drehmaschine. Unabhängig von der gewählten Querschnittskontur ist es z.B. nicht notwendig, die einzelnen Elektrodenschichten mit herausgeführten Kontaktlaschen oder Kontaktpins zu versehen, um diese in einer Leiterplatte einzulöten. Die Kontaktierung kann auch direkt über Federkontakte, die an der Leiterplatte angeordnet sind, erfolgen. Die fertiggestellte lonentransportröhre mit den von außen zugänglichen, elektrisch kontaktierbaren Elektroden kann beispielsweise über ein mechanisches Fixiermittel wie eine Klammer oder eine Spannvorrichtung auf der Leiterplatte befestigt werden und auf diese Weise gegen die Federkontakte gepresst werden. Dies erlaubt eine einfache und sichere Kontaktierung der Vielzahl der Elektroden. Selbstverständlich ist auch eine Kontaktierung über die zuvor erwähnten Kontaktlaschen oder Kontaktpins möglich, sowie eine direkte Montage auf Kontaktflächen einer Leiterplatte (als sog. surface-mounted device (SMD)) durch Löten.

Gemäß einer vorteilhaften Weiterbildung der Erfindung ist die Dicke der Isolationsschicht geringer als die Dicke der Elektrodenschicht. Dies erlaubt die Fertigung besonders effizienter lonentransportröhren, die ein sehr homogenes elektrisches Feld erzeugen, wobei die erforderlichen Potentialunterschiede zwischen den einzelnen Elektroden relativ gering sein können, um die gewünschte Feldstärke zu erreichen.

Besonders vorteilhaft und effizient beim Einsatz in einer hochsensiblen Gasanalyse-Einrichtung ist eine lonentransportröhre, die eine, mehrere oder alle der nachfolgenden Bedingungen erfüllt:
- Die Dicke der Isolationsmaterial-Schicht ist ≤ 25 % der Dicke der Elektrodenschicht, insbesondere ≤ 12 % der Dicke der Elektrodenschicht.
- Die Dicke der Elektrodenschicht ist ≤ 5 mm, insbesondere ≤ 2,5 mm.
- Die Dicke der Isolationsmaterial-Schicht ist ≤ 1,5 mm, insbesondere ≤ 0,5 mm.
- Der Durchmesser der lonentransportkammer liegt im Bereich von 1 bis 50 mm, insbesondere 3 bis 10 mm.
- Die Breite und/oder die Höhe der lonentransportröhre ist kleiner als 70 mm, insbesondere kleiner als 15 mm.

Die für die Elektrodenschichten und die Isolationsmaterial-Schichten zu verwendenden Materialien müssen, da Störeinflüsse durch Fremdmaterialien bei der Gasanalyse vermieden werden sollen, grundsätzlich geeignete inerte Materialien sein. Für die Elektrodenschichten sind elektrisch leitende Materialien notwendig, für das Isolationsmaterial elektrisch isolierende Materialien. So können für die Elektrodenschichten insbesondere Metallmaterialien eingesetzt werden, z.B. Edelstahl, Platin und/oder Gold. Es können auch andere, weniger edle Metalle verwendet werden wie z.B. Kupfer, Aluminium, Messing. Hierbei ist es vorteilhaft, solche Materialien nach der abschließenden mechanischen Bearbeitung zumindest an den freiliegenden Flächen mit einem anderen Material mit noch besseren inerten Eigenschaften zu beschichten, z.B. mit Gold und/oder Platin. Die Beschichtung kann z.B. chemisch oder galvanisch erfolgen.

Für das Isolationsmaterial eignet sich besonders Polyetheretherketon (PEEK) oder ein vergleichbares Keton. Aber auch sonstige Kunststoffmaterialien sind geeignet, die ausreichend inerte Eigenschaften haben und hinsichtlich der Verklebung mit den Elektrodenschichten und der mechanischen Stabilität geeignete Eigenschaften haben, wie z.B. lichthärtende Kunststoffe oder Zweikomponenten-Kunststoffe, wie z.B. Kunstharz mit Härter.

Die erfindungsgemäße lonentransportröhre bzw. eine erfindungsgemäß hergestellte lonentransportröhre kann z.B. als Driftröhre einer Gasanalyse-Einrichtung verwendet werden, z.B. bei einem lonenmobilitätsspektrometer. Sie kann alternativ oder zusätzlich auch als Reaktionsröhre eines lonenmobilitätsspektrometers genutzt werden, z.B. wenn ein mit Unterdruck arbeitendes lonenmobilitätsspektrometer gemäß WO 2015/091146 A1 bereitgestellt werden soll.

Die Erfindung wird nachfolgend anhand von Ausführungsbeispielen unter Verwendung von Zeichnungen näher erläutert.

Es zeigen:

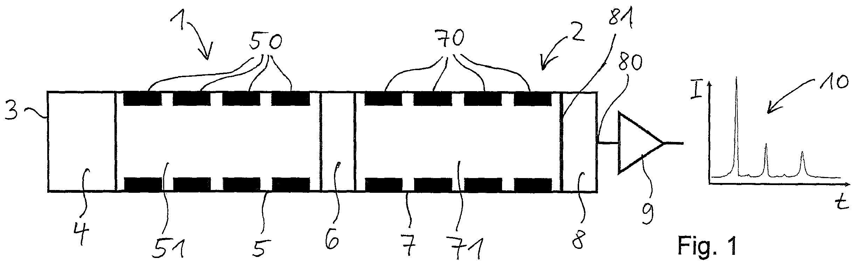

- Figur 1 -: eine Gasanalyse-Einrichtung mit einem lonenmobilitätsspektrometer,

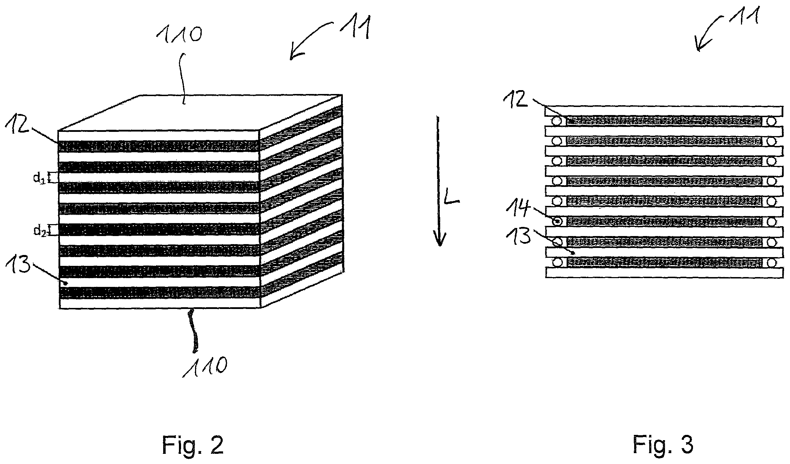

- Figur 2 -: einen erfindungsgemäßen Materialblock in perspektivischer Ansicht,
- Figuren 3 bis 7 -: Schritte bei der Fertigung des Materialblocks und

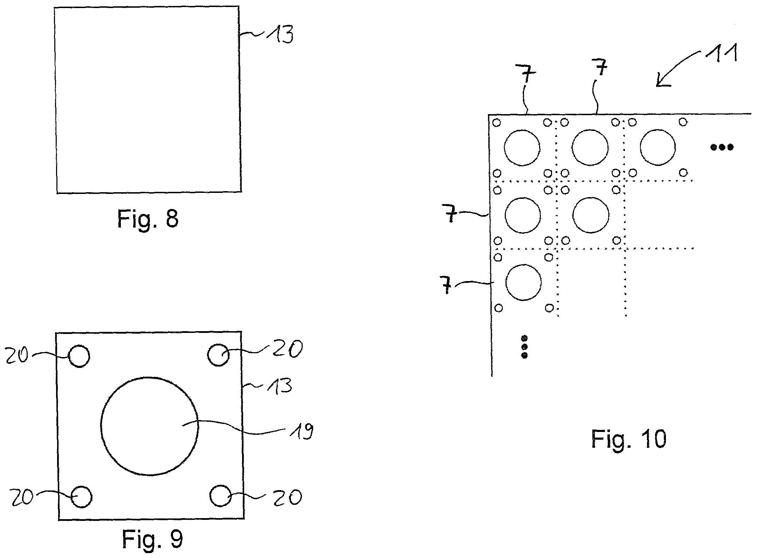

- Figuren 8 und 9 -: Ausführungsformen von Elektrodenschichten in Draufsicht und
- Figur 10 -: eine Nutzen-Fertigung von lonentransportröhren und

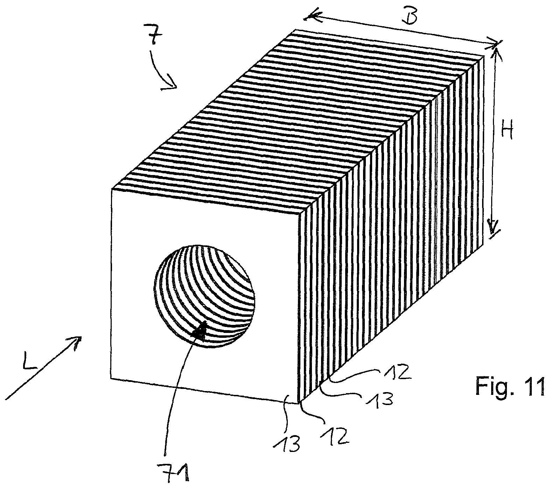

- Figur 11 -: eine fertiggestellte lonentransportröhre in perspektivischer Darstellung und

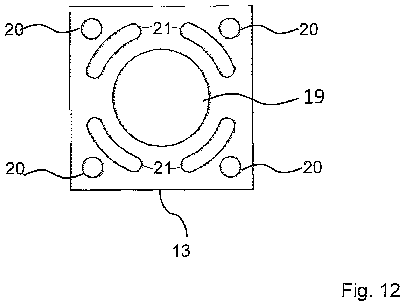

- Figur 12 -: eine weitere Ausführungsform einer Elektrodenschicht in Draufsicht.

In den Figuren werden gleiche Bezugszeichen für einander entsprechende Elemente verwendet.

Die Figur 1 zeigt eine Gasanalyseeinrichtung 1 in stark schematisierter Darstellung. Die in der Figur 1 dargestellte Gasanalyseeinrichtung 1 weist ein lonenmobilitätsspektrometer 2 auf, das einen z.B. röhren- oder tubusförmigen Gehäusekorpus 3 hat. Der Gehäusekorpus 3 unterteilt sich in einen lonisationsquellen-Bereich 4, eine Reaktionsröhre 5 mit einer lonentransportkammer 51, ein lonentor 6, eine Driftröhre 7 mit einer lonentransportkammer 71 sowie einen lonendetektor 8, die wie in Figur 1 dargestellt in der zuvor genannten Reihenfolge hintereinander angeordnet sind. Der lonendetektor 8, der z.B. als Faraday-Detektor ausgebildet sein kann , z. B. in Becherform oder in Form einer Metallplatte, ist mit einer an einem elektrischen Anschluss 80 des lonenmobilitätsspektrometers 2 angeschlossenen Verstärker 9 verbunden. Durch den Verstärker 9 wird der über den Anschluss 80 zugeführte, durch die Ladungen der Ionen erzeugte elektrische Strom verstärkt, sodass sich am Ausgang des Verstärkers 9 ein Spektrogramm 10 ergibt. Der lonendetektor 8 weist außerdem einen Schirm bzw. eine Apertur 81 auf, die ebenfalls in Gitterform ausgebildet sein kann.

Die Figur 1 zeigt ferner, dass in der Reaktionsröhre 5 und in der Driftröhre 7 Elektroden 50, 70 einer ersten bzw. zweiten Felderzeugungseinrichtung angeordnet sind. Die Elektroden 50, 70 sind im dargestellten Ausführungsbeispiel als Ringelektroden ausgebildet, die einen Ring im Inneren der Reaktionsröhre 5 bzw. der Driftröhre 7 bilden. Die Reaktionsröhre 5 und die Driftröhre 7 können als erfindungsgemäße lonentransportröhre ausgebildet sein. Die Ringelektroden 50, 70 können insbesondere schichtweise gebildet werden, wie durch die nachfolgend erläuterten Herstellungsschritte anhand der Elektrodenschichten erläutert wird.

Die Figur 2 zeigt einen erfindungsgemäßen Materialblock 11, bei dem eine Vielzahl von elektrisch leitenden Elektrodenschichten 13 überlappend entlang einer Längsachse L des Materialblocks 11 hintereinander und im Wesentlichen parallel zueinander angeordnet ist. Zwischen benachbarten Elektrodenschichten, die voneinander beabstandet sind, sind jeweilige Schichten aus Isolationsmaterial 12 angeordnet. Eine Schicht aus Isolationsmaterial 12 weist dabei eine Dicke d₂ auf, eine Elektrodenschicht die Dicke d₁. Der gewünschte Hohlraum kann in dem Materialblock 11 erzeugt werden, indem ein Zerspanungswerkzeug von einer Stirnseite 110 oder beiden Stirnseiten 110 des Materialblocks 11 in den Materialblock eingeführt wird.

Die Figur 3 zeigt einen vorbereitenden Schritt zur Herstellung des Materialblocks 11, wenn ein Isolationsmaterial 12 verwendet wird, das im vorliegenden Aggregatzustand keine ausreichende Eigenstabilität aufweist, um eine ausreichende Parallelität und einen ausreichenden Abstand der Elektrodenschichten 13 voneinander zu gewährleisten. In diesem Fall werden Abstandshalter 14 zwischen benachbarten Elektrodenschichten 13 angeordnet und die auf diese Weise festgelegten Zwischenräume zwischen den Elektrodenschichten 13 mit dem Isolationsmaterial 12 gefüllt. Sodann kann das Isolationsmaterial aktiviert werden, z.B. thermisch erwärmt und damit verflüssigt. Um die ausreichende Verklebung nach dem anschließenden Aushärten des Isolationsmaterials zu gewährleisten, kann die Anordnung gemäß Figur 3 an ihren oberen und unteren Stirnseiten mit einer Presskraft beaufschlagt werden.

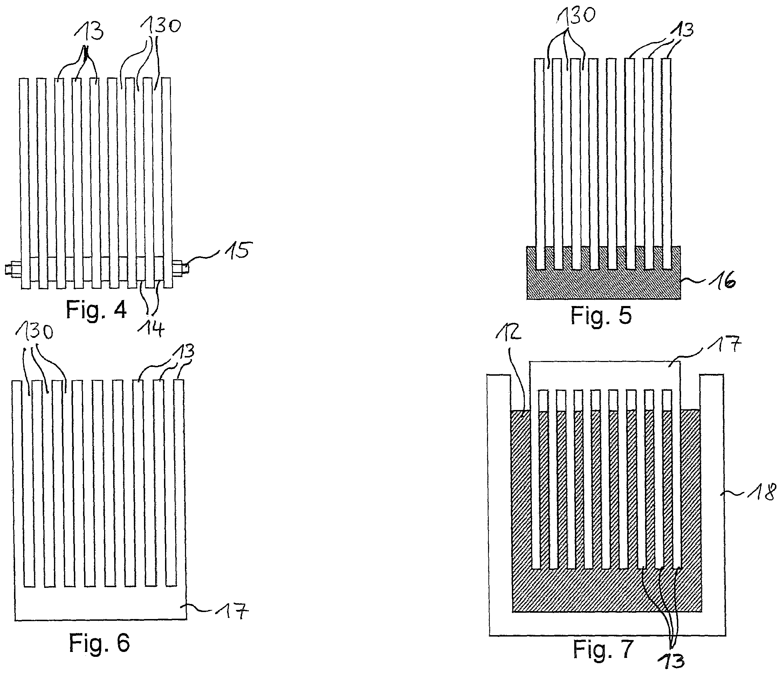

Alternativ können die Elektrodenschichten auch in Form von plattenförmigem Elektrodenmaterial bereitgestellt werden und durch spezielle Vorrichtungen in der gewünschten im Wesentlichen parallel zueinander liegenden Anordnung bereitgestellt werden. Die Figur 4 zeigt diesbezüglich eine an einer Seite der Elektrodenschichten 13 angeordnete Halterung mit Abstandshaltern 14 zwischen den benachbarten Elektrodenschichten und einer durchgehenden Verbindungsstange, z.B. einer Gewindestange 15 mit aufgeschraubten Muttern, um auf diese Weise die Elektrodenschichten 13 mit definierten Zwischenräumen 130 in der dargestellten Anordnung zu halten.

Die Figur 5 zeigt diesbezüglich das Halten der Elektrodenschichten 13 durch einen besonderen Halter 16, der entsprechende Einschnitte aufweist, in die die Elektrodenschichten 13 eingesteckt werden können und in denen sie durch Kraft-, Form- und/oder Stoffschluss mit definierten Zwischenräumen 130 gehalten werden können.

Eine weitere in Figur 6 dargestellte, vorteilhafte Möglichkeit, die parallele Anordnung aus den Elektrodenschichten 13 bereitzustellen, besteht darin, dass ein Materialblock aus dem gewünschten Elektrodenmaterial bereitgestellt wird und durch entsprechende Bearbeitung mit die Zwischenräume 130 bildenden Schlitzen versehen wird, so dass zwischen den Schlitzen die Elektrodenschichten 13 verbleiben. Die Schlitze werden dabei nur bis zu einer bestimmten Tiefe in dem Materialblock erzeugt, so dass ein die einzelnen Elektrodenschichten 13 weiterhin haltender, durchgehender Materialbereich 17 verbleibt.

Die so gebildete Elektrodenschichten-Anordnung, wie z.B. anhand der Figuren 4 bis 6 erläutert, kann dann mit dem Isolationsmaterial umgossen werden. Ein vorteilhafter Vorgang für diesen Umgießvorgang ist in der Figur 7 dargestellt. In einem Behälter 18 befindet sich das Isolationsmaterial 12, das bereits verflüssigt wurde oder ohnehin in flüssiger Form bereitsteht. In dieses Bad aus Isolationsmaterial 12 wird die zuvor erläuterte Anordnung aus den Elektrodenschichten in umgekehrter Weise eingetaucht, d.h. die Elektrodenschichten 13 werden voran in das Isolationsmaterial eingetaucht, und die entsprechende Haltevorrichtung zum Halten der Elektrodenschichten 14, 15, 16, 17 befindet sich dann an der Oberseite und muss nicht in das Isolationsmaterial eingetaucht werden. Nach dem Aushärten des Isolationsmaterials 12 kann der Behälter 18 entfernt werden und der verbleibende Materialblock entsprechend weiterbearbeitet werden, d.h. die Halterung 14, 15, 16, 17 wird entfernt und überschüssiges Isolationsmaterial an der Außenseite des Materialblocks kann ebenfalls entfernt werden.

Die einzelnen Elektrodenschichten 13 können, wie in der Figur 8 erkennbar ist, als durchgehende Platte oder Folie des Elektrodenmaterials bereitgestellt werden, d.h. ohne zusätzliche Strukturierung im Innenbereich. Alternativ kann auch bereits eine Strukturierung z.B. im Innenbereich vorgesehen werden, wie anhand der Figur 9 beispielhaft dargestellt ist. So kann z.B. eine zentrale Aussparung 19 vorgesehen sein, die die Grundlage für den in dem Materialblock später zu erzeugenden Hohlraum bildet, der die lonentransportkammer bilden soll. Zusätzlich können weitere Aussparungen, z.B. in den Randbereichen 20 vorgesehen werden. Diese eignen sich z.B. als Grundlage für eine Befestigung von weiteren Komponenten der Gasanalyse-Einrichtung an der hergestellten lonentransportröhre, z.B. zum Befestigen einer lonenquelle, eines lonentors oder des Detektors, z.B. dessen Schirmgitter. Hierzu kann z.B. in die letztendlich mit dem Isolationsmaterial verfüllten Aussparungen 20 ein Gewinde geschnitten werden, so dass die genannten Komponenten auf einfache Weise an die lonentransportröhre angeschraubt werden können.

Die Figur 10 zeigt einen Materialblock 11, ähnlich wie in der Figur 2 dargestellt, jedoch mit bereits vorstrukturierten Elektrodenschichten gemäß Figur 9 und in einer Ansicht auf die obere Stirnseite. Aus diesem Materialblock kann nun im Sinne einer Nutzen-Fertigung eine Vielzahl von lonentransportröhren herausgeschnitten werden, wie durch die dünnen gepunkteten Linien angedeutet ist.

Die Figur 11 zeigt eine beispielhafte lonentransportröhre in Form der Driftröhre 7. Erkennbar ist, dass sich die als innerer Hohlraum erzeugte lonentransportkammer 71 sich in Richtung der Längsachse L durch die lonentransportröhre hindurch erstreckt. Durch die von außen zugänglichen, elektrisch kontaktierbaren Elektrodenschichten 13 ist in Verbindung mit der quadratischen oder rechteckförmigen Außenkontur eine einfache elektrische Kontaktierung der Vielzahl der Elektrodenschichten möglich.

Die Figur 12 zeigt eine weitere Ausführungsform einer Elektrodenschicht 13, die gegenüber der Ausführungsform der Figur 9 noch weitere Aussparungen 21 aufweist. Diese Aussparungen 21 sind beispielhaft in Form von gekrümmt verlaufenden Langlöchern ausgebildet, sie können auch andere Konturen und andere Positionen aufweisen als abgebildet. Die Aussparungen 21 werden beim Aufbringen des Isolationsmaterials mit diesem Isolationsmaterial ausgefüllt, was die Stabilität des entstehenden Materialblocks weiter verbessert.

## Patentansprüche

1. Verfahren zur Herstellung einer lonentransportröhre (5, 7), die zum Transport von Ionen durch eine als innerer Hohlraum der lonentransportröhre ausgebildete lonentransportkammer (51, 71) mittels eines elektrischen Felds geeignet ist, das durch Anlegen elektrischer Potentiale an Elektroden (50, 70) der lonentransportröhre (5, 7) erzeugbar ist, mit den Herstellungsschritten:
a) Bereitstellen eines vollen Materialblocks (11), bei dem eine Vielzahl von elektrisch leitenden Elektrodenschichten (13) überlappend entlang einer Längsachse (L) des Materialblocks (11) hintereinander und im Wesentlichen parallel zueinander angeordnet ist, wobei jeweils benachbarte Elektrodenschichten (13) voneinander beabstandet sind und im hierdurch gebildeten Zwischenraum zwischen benachbarten Elektrodenschichten (13) jeweils wenigstens eine Schicht aus Isolationsmaterial (12) vorhanden ist, durch die die benachbarten Elektrodenschichten (13) miteinander verklebt und gegeneinander elektrisch isoliert sind,
b) Erzeugen eines Hohlraums in dem Materialblock (11), um die lonentransportkammer (51, 71) zu bilden.

2. Verfahren nach dem vorhergehenden Anspruch, **dadurch gekennzeichnet, dass** der Hohlraum in dem Materialblock (11) durch Zerspanung, Laserbearbeitung, Ätzen oder eine Kombination daraus erzeugt wird, indem ein Bearbeitungswerkzeug, insbesondere ein Zerspanungswerkzeug, von einer Stirnseite (110) des Materialblocks (11) derart in den Materialblock eingeführt wird, dass mit vordringendem Bearbeitungswerkzeug
a) abwechselnd eine Schicht aus Isolationsmaterial (12) und eine Elektrodenschicht (13) oder
b) abwechselnd eine Schicht aus Isolationsmaterial (12) und eine Elektrodenschicht (13) zusammen mit in der Elektrodenschicht (13) eingelagertem Isolationsmaterial oder
c) nur Isolationsmaterial (12)
abgetragen wird.

3. Verfahren nach einem der vorhergehenden Ansprüche, **dadurch gekennzeichnet, dass** das Isolationsmaterial (12) in Feststoffform, in pastöser Form oder in flüssiger Form, z.B. durch Verspachteln, Spritzen, Spritzgießen und/oder Pressen, in die Zwischenräume (130) zwischen den Elektrodenschichten (13) gebracht und damit verklebt wird.

4. Verfahren nach einem der vorhergehenden Ansprüche, **dadurch gekennzeichnet, dass** der Materialblock (11) hergestellt wird, indem abwechselnd Elektrodenschichten (13) und Isolationsmaterial-Schichten (12) in zueinander im Wesentlichen paralleler Anordnung gestapelt werden und das Isolationsmaterial (12) dann zur Herstellung der Verklebung aktiviert wird und danach aushärtet oder ohne Aktivierung aushärtet.

5. Verfahren nach einem der Ansprüche 1 bis 3, **dadurch gekennzeichnet, dass** der Materialblock (11) hergestellt wird, indem die Elektrodenschichten (13) in zueinander im Wesentlichen paralleler Anordnung mit dem für die zu erzeugende lonentransportröhre (5, 7) erforderlichen Abstand voneinander bereitgestellt werden, wobei sich die Elektrodenschichten (13) zumindest in den Bereichen, in denen die lonentransportkammer (51, 71) erzeugt werden soll, nicht berühren, und dann die so bereitgestellte Elektrodenschichtenanordnung mit dem Isolationsmaterial (12) umgossen wird, so dass zwischen benachbarten Elektrodenschichten (13) gebildete Zwischenräume (130) mit dem Isolationsmaterial ausgefüllt werden.

6. Verfahren nach dem vorhergehenden Anspruch, **dadurch gekennzeichnet, dass** das Umgießen der Elektrodenschichtenanordnung durch Eintauchen der vorbereiteten Elektrodenschichtenanordnung in das Isolationsmaterial (12) erfolgt.

7. Verfahren nach einem der vorhergehenden Ansprüche, **dadurch gekennzeichnet, dass** die einige oder alle Elektrodenschichten (13) vor dem Verkleben mit dem Isolationsmaterial (12) mit Aussparungen (19, 20, 21) strukturiert werden, insbesondere Aussparungen (19, 20) im Bereich der zu bildenden lonentransportkammer (51, 71).

8. Verfahren nach einem der vorhergehenden Ansprüche, **dadurch gekennzeichnet, dass** aus dem Materialblock (11) durch Vereinzeln in einer oder mehrerer im Wesentlichen parallel zur Längsachse (L) des Materialblocks (11) verlaufenden Trennebenen mehrere lonentransportröhren (5, 7) hergestellt werden.

9. Verfahren nach einem der vorhergehenden Ansprüche, **dadurch gekennzeichnet, dass** die Dicke (d₂) der Isolationsmaterial-Schicht (12) geringer ist als die Dicke (d₁) der Elektrodenschicht (13).

10. Verfahren nach einem der vorhergehenden Ansprüche, **dadurch gekennzeichnet, dass** die lonentransportröhre (5, 7) eine oder mehrere innere Kammern aufweist, die in Längsrichtung der lonentransportröhre durch eine Vielzahl benachbarter Elektrodenschichten (13) oder sämtliche Elektrodenschichten (13) verlaufen und mit dem Isolationsmaterial (12) ausgefüllt sind.

## Claims

1. A method of manufacturing an ion transport tube (5, 7) suitable for transporting ions through an ion transport chamber (51, 71) formed as an inner cavity of the ion transport tube by means of an electric field which can be generated by applying electric potentials to electrodes (50, 70) of the ion transport tube (5, 7), comprising the manufacturing steps:
a) providing a solid block of material (11), in which a plurality of electrically conductive electrode layers (13) are arranged overlappingly along a longitudinal axis (L) of the block of material (11) one behind the other and essentially parallel to one another, in each case adjacent electrode layers (13) being spaced apart from one another and in each case at least one layer of insulating material (12) being present in the interspace formed thereby between adjacent electrode layers (13), by means of which layer the adjacent electrode layers (13) are bonded to one another and are electrically insulated from one another,
b) creating a cavity in the block of material (11) to form the ion transport chamber (51, 71).

2. Method according to the preceding claim, **characterized in that** the cavity in the material block (11) is created by machining, laser machining, etching, or a combination thereof, **in that** a machining tool, in particular a cutting tool, is inserted into the material block (11) from an end face (110) of the material block (11) in such a way that with advancing machining tool
a) alternately a layer of insulating material (12) and an electrode layer (13) or
b) alternately a layer of insulating material (12) and an electrode layer (13) together with insulating material embedded in the electrode layer (13) or
c) insulation material only (12)
is removed.

3. Process according to one of the preceding claims, **characterized in that** the insulation material (12) is brought into the interstices (130) between the electrode layers (13) in solid form, in paste form or in liquid form, e.g. by spackling, spraying, injection molding and/or pressing, and is bonded thereto.

4. Method according to any one of the preceding claims, **characterized in that** the block of material (11) is produced by alternately stacking electrode layers (13) and insulating material layers (12) in substantially parallel arrangement to each other and then activating the insulating material (12) to form the bond and thereafter curing or curing without activation.

5. Method according to any one of claims 1 to 3, **characterized in that** the material block (11) is produced by providing the electrode layers (13) in a mutually substantially parallel arrangement with the spacing from each other required for the ion transport tube (5, 7) to be produced, the electrode layers (13) not touching each other at least in the regions, in which the ion transport chamber (51, 71) is to be generated, and then the electrode layer arrangement thus provided is encapsulated with the insulation material (12), so that gaps (130) formed between adjacent electrode layers (13) are filled with the insulation material.

6. Method according to the preceding claim, **characterized in that** the encapsulation of the electrode layer assembly is carried out by dipping the prepared electrode layer assembly into the insulation material (12).

7. Method according to one of the preceding claims, **characterized in that** the some or all of the electrode layers (13) are patterned with recesses (19, 20, 21) before being bonded to the insulation material (12), in particular recesses (19, 20) in the region of the ion transport chamber (51, 71) to be formed.

8. Method according to any one of the preceding claims, **characterized in that** a plurality of ion transport tubes (5, 7) are produced from the material block (11) by separating them in one or more separation planes extending substantially parallel to the longitudinal axis (L) of the material block (11).

9. Method according to one of the preceding claims, **characterized in that** the thickness (d₂) of the insulation material layer (12) is smaller than the thickness (d₁) of the electrode layer (13).

10. Method according to any one of the preceding claims, **characterized in that** the ion transport tube (5, 7) comprises one or more internal chambers extending longitudinally of the ion transport tube through a plurality of adjacent electrode layers (13) or all electrode layers (13) and filled with the insulation material (12).

## Revendications

1. Procédé de fabrication d'un tube de transport d'ions (5, 7) adapté au transport d'ions à travers une chambre de transport d'ions (51, 71), réalisée sous la forme d'une cavité intérieure du tube de transport d'ions, au moyen d'un champ électrique qui peut être généré en appliquant des potentiels électriques à des électrodes (50, 70) du tube de transport d'ions (5, 7), comprenant les étapes de fabrication consistant à :
a) fournir un bloc de matériau massif (11) dans lequel une pluralité de couches d'électrode (13) électriquement conductrices sont disposées en chevauchement le long d'un axe longitudinal (L) du bloc de matériau (11) les unes derrière les autres et sensiblement parallèlement les unes aux autres, des couches d'électrode (13) respectivement voisines étant espacées les unes des autres, et au moins une couche de matériau isolant (12) étant disposée dans l'interstice ainsi formé entre des couches d'électrode (13) voisines, par laquelle les couches d'électrode (13) voisines sont collées les unes aux autres et isolées électriquement les unes des autres,
b) réaliser une cavité dans le bloc de matériau (11) pour former la chambre de transport d'ions (51, 71).

2. Procédé selon la revendication précédente,
**caractérisé en ce que** la cavité dans le bloc de matériau (11) est réalisée par enlèvement de copeaux, par usinage au laser, par attaque chimique ou par une combinaison de ces procédés, en introduisant un outil d'usinage, en particulier un outil d'enlèvement de copeaux, dans le bloc de matériau à partir d'une face frontale (110) dudit bloc de matériau (11), de telle sorte que l'outil d'usinage en progression permet d'enlever
a) en alternance une couche de matériau isolant (12) et une couche d'électrode (13), ou
b) en alternance une couche de matériau isolant (12) et une couche d'électrode (13), ensemble avec du matériau isolant incorporé dans la couche d'électrode (13), ou
c) seul le matériau isolant (12).

3. Procédé selon l'une des revendications précédentes,
**caractérisé en ce que** le matériau isolant (12) est amené sous forme solide, sous forme pâteuse ou sous forme liquide, par exemple par masticage, projection, moulage par injection et/ou pressage, dans les interstices (130) entre les couches d'électrode (13) et y est collé.

4. Procédé selon l'une des revendications précédentes,
**caractérisé en ce que** le bloc de matériau (11) est fabriqué en empilant en alternance des couches d'électrode (13) et des couches de matériau isolant (12) selon une disposition sensiblement parallèle les unes aux autres, puis en activant le matériau isolant (12) pour réaliser le collage et en le laissant durcir ensuite, ou en le laissant durcir sans activation.

5. Procédé selon l'une des revendications 1 à 3,
**caractérisé en ce que** le bloc de matériau (11) est fabriqué en fournissant les couches d'électrode (13) selon une disposition sensiblement parallèle les unes aux autres avec l'espacement nécessaire pour le tube de transport d'ions (5, 7) à produire, les couches d'électrode (13) ne se touchant pas au moins dans les zones dans lesquelles la chambre de transport d'ions (51, 71) doit être produite, puis en surmoulant l'ensemble de couches d'électrode ainsi fourni avec le matériau isolant (12), de sorte que des interstices (130) formés entre des couches d'électrode (13) voisines sont remplis avec le matériau isolant.

6. Procédé selon la revendication précédente,
**caractérisé en ce que** le surmoulage de l'ensemble de couches d'électrode est effectué par immersion de l'ensemble de couches d'électrode préparé dans le matériau isolant (12).

7. Procédé selon l'une des revendications précédentes,
**caractérisé en ce qu'**avant le collage avec le matériau isolant (12), certaines ou toutes les couches d'électrode (13) sont structurées avec des évidements (19, 20, 21), en particulier avec des évidements (19, 20) dans la zone de la chambre de transport d'ions (51, 71) à former.

8. Procédé selon l'une des revendications précédentes,
**caractérisé en ce que** plusieurs tubes de transport d'ions (5, 7) sont fabriqués à partir du bloc de matériau (11) en les individualisant dans un ou plusieurs plans de séparation qui s'étendent sensiblement parallèlement à l'axe longitudinal (L) du bloc de matériau (11).

9. Procédé selon l'une des revendications précédentes,
**caractérisé en ce que** l'épaisseur (d₂) de la couche de matériau isolant (12) est inférieure à l'épaisseur (d₁) de la couche d'électrode (13).

10. Procédé selon l'une des revendications précédentes,
**caractérisé en ce que** le tube de transport d'ions (5, 7) comprend une ou plusieurs chambres intérieures qui s'étendent dans la direction longitudinale du tube de transport d'ions à travers une pluralité de couches d'électrode (13) voisines ou à travers toutes les couches d'électrode (13) et qui sont remplies avec le matériau isolant (12).
